Europäisches Patentamt

European Patent Office

Office européen des brevets

(11) Publication number: **0 072 198**
**B1**

# (12) EUROPEAN PATENT SPECIFICATION

(45) Date of publication of patent specification: **28.05.86**

(51) Int. Cl.⁴: **G 03 B 1/48**

(21) Application number: **82304112.4**

(22) Date of filing: **04.08.82**

(54) A film support element assembly for a projector, camera, and like apparatus.

(30) Priority: **06.08.81 US 290630**

(43) Date of publication of application:
**16.02.83 Bulletin 83/07**

(45) Publication of the grant of the patent:
**28.05.86 Bulletin 86/22**

(84) Designated Contracting States:
**AT BE CH DE FR GB IT LI LU NL SE**

(56) References cited:
**DE-A-2 015 185**
**US-A-1 334 337**
**US-A-2 910 924**
**US-A-3 239 868**
**US-A-3 600 073**
**US-A-3 794 415**

(73) Proprietor: **IMAX SYSTEMS CORPORATION**
**38 Isabella Street**
**Toronto Ontario M4Y 1N1 (CA)**

(72) Inventor: **Shaw, William Chester**
**7 Joycelyn Drive**
**Streetsville Ontario L5M 1T5 (CA)**

(74) Representative: **Hind, Raymond Stenton et al**
**c/o MATHISEN, MACARA & Co. European**
**Patent Attorneys Lyon House Lyon Road**
**Harrow Middlesex HA1 2ET (GB)**

Courier Press, Leamington Spa, England.

## Description

The present invention relates to a film support element assembly for a projector, camera or like apparatus having a rolling loop film transport mechanism, the assembly being adapted to support a film in relation to an aperture of said apparatus and comprising a lens element having a film support surface across which successive portions of a film of known width can be laid during transport of said film in a film transport path including said aperture.

The invention further relates to cameras and projectors including such film support element assemblies.

US-A-3494524 discloses the principle of rolling loop film transport mechanism. The mechanism includes a curved stator and a rotor which co-operate to define a passage through which the film is transported. The rotor has gaps in which loops of films are continuously formed as the rotor rotates. Each loop is developed by feeding film from an input sprocket into one of the rotor gaps as the gap travels from a film inlet location to the aperture, and the loop decays progressively as the gap travels from the aperture to a driven output sprocket. The film is projected or exposed (as the case may be) at the position of the aperture and is held in that position on a registration pin or pins. A number of improvements in this original mechanism are disclosed in US-A-3600073.

In a rolling loop film transport mechanism, the film typically conforms to the curvature of the stator at the position of the projection or exposure aperture. US-A-3794415 does disclose a proposal for permitting the film to adopt a flat configuration during projection but, at least in commercial projectors, it has been found preferable to allow the film to conform to the curvature of the stator at the position of the projection aperture. A lens element known as a "field flattener" supports the film at this position and has a cylindrical curved surface across which the film is laid; the curvature of this surface in combination with other lens elements compensates for the curvature of the film and provides for proper projection of the image.

Normal practice is to position the field flattener in an opening in the stator so that the film frames are successively laid onto the cylindrical surface of the field flattener as the film moves through the projector. A problem with this arrangement is that particles of dust, film emulsion and other debris carried with the film tend to accumulate on the cylindrical surface of the field flattener element. The projection lens of the projector will be focused on the film immediately adjacent to that cylindrical surface so that particles on the surface will be almost in focus.

It has therefore been proposed to provide interchangeable field flattener elements so that a "dirty" element can be replaced with a clean element. In the projector disclosed in US-A-3600073, the field flattener lens element is slidably received in a pair of vertical guides. The element is located against downward movement by a latch which can be released by a button at the top of the lens element holder positioned so that the latch is automatically released when a clean lens element is placed in the guides and moved downwardly. The "dirty" element is ejected downwardly from the guides and the clean element moves into its place. It has also been proposed to provide a wiper above the film path for wiping the cylindrical surface of the replacement lens element as it moves into place.

The arrangement disclosed in US—A—3600073 has been found to operate very satisfactorily in practice while the projector is running, with a barely perceptible effect on the projected image. Nevertheless, to the practiced eye, it is possible to detect a black bar moving across the projected image when the lens elements are changed.

The technical problem as therefore to provide an improved film support element assembly in which the cleanliness of the lens element can be ensured.

The assembly of the present invention is characterised by means supporting said lens element for movement in a direction generally normal to said path between first and second positions in which respectively different portions of said film support surface are disposed in said film path; said film support surface of the lens element being continuous and of uniform cross-sectional shape and having a length sufficiently in excess of twice the width of the film so that said movement of the lens element between its first and second positions will cause a portion of said film support surface in said path to move to a position adjacent to and clear of said path; and, cleaning means adapted to remove debris from a said portion of said film support surface which has been moved out of said path.

In a preferred embodiment, first and second wiper elements extend transversely of and in contact with the film support surface on respectively opposite sides of the film path. The wiper elements are adapted to wipe the surface and trap debris upon movement of the lens element relative to the wiper elements. The wiper elements are removable for disposal of trapped debris. The length of the film support surface of the lens element is preferably such that movement of the lens element between its first and second positions will cause the relevant wiper element to traverse the entire axial extent of the portion of the film support surface moving out of the film path.

In practice, it has been found preferable for the length of the film support surface of the lens element to approximate two and a half times the width of the film. Provided the wiper elements are disposed fairly close to the film path, debris accumulated on the curved surface adjacent to but inwardly of one of the wipers will be removed by the other wiper when the lens element is moved to bring a fresh portion of its film support surface into the film path. Guiding surfaces for the top and bottom edges of the film are preferably provided on the lens element support means so that the film path is always accurately defined with respect to the axial direction of the lens element. However, such surfaces could alternatively be provided in the projector or other apparatus in which the lens element assembly is used.

In any event, the lens element may be a field flattener having a cylindrically curved film support surface.

Some embodiments of the invention will now be described, by way of example only, with reference to the accompanying diagrammatic drawings, in which:

Fig. 1 is a perspective view, partly exploded, of part of a motion picture projector of the general form disclosed in US—A—3600073 but incorporating a film support element assembly of the present invention having a "field flattener" lens element;

Fig. 2 is a perspective view of the assembly of Fig. 1 but taken from the opposite side as compared with Fig. 1 and with associated structure omitted.

Fig. 3 is a planar horizontal sectional view on line III—III of Fig. 2;

Fig. 4 is a vertical sectional view on line IV—IV of Fig. 2;

Fig. 5 is a detail view of the part of Fig. 4 indicated at A;

Figs. 6, 8 and 10 are views somewhat similar to Fig. 2 but illustrating three alternative forms of cleaning means which may be employed in a film support element assembly;

Fig. 7 is a detail sectional view on line VII—VII of Fig. 6; and

Fig. 9 is a longitudinal sectional view on line IX—IX of Fig. 8.

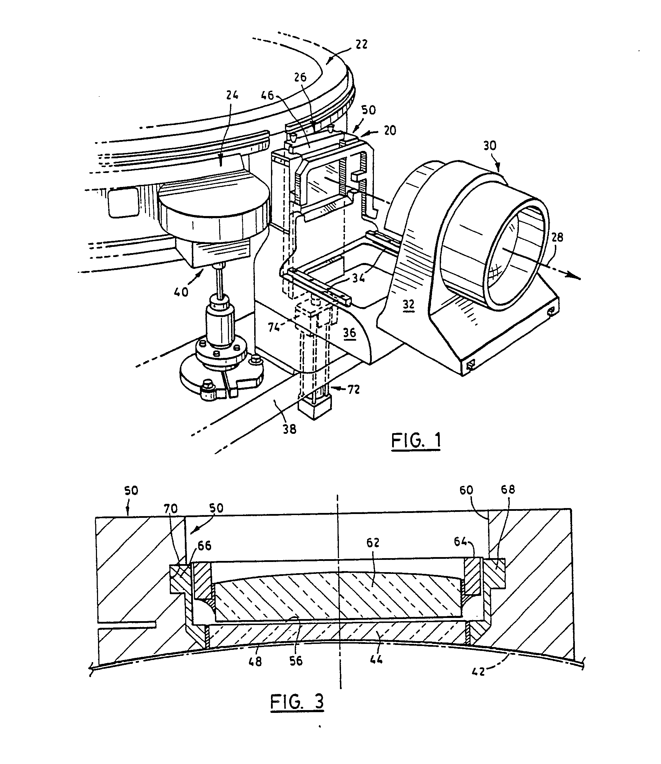

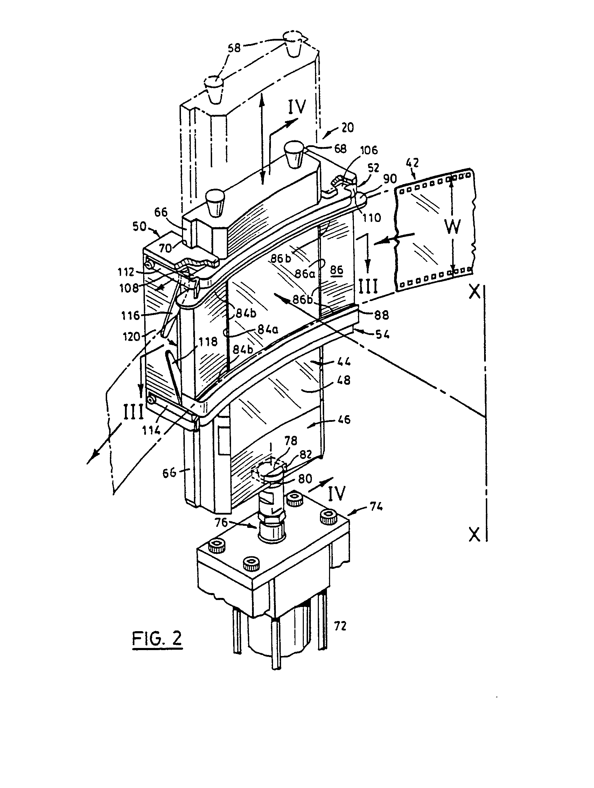

Referring first to Fig. 1, the film support element assembly is generally indicated by reference numeral 20 but is partly concealed by associated structure forming part of the projector proper; assembly 20 is better shown in Fig. 2. However. before referring to that view, it may be convenient to briefly describe the principal components of the projector shown in Fig. 1.

Reference may be made to the US—A—3600073 for a complete description of the rolling loop film transport mechanism of the projector. For present purposes, it is sufficient to note that the projector includes a cylindrical rotor, part of which is visible at 22 in Fig. 1 and a stator, part of which is indicated at 24. These two components together define a film passage along which the film is transported by forming successive rolling loops in the film as described in the patent. Successive frames in the film are transported by the rolling loop mechanism to a projection aperture in the stator at the location indicated at 26 in Fig. 1. The film is not in fact visible in that view but can be seen in Fig. 2 (see later).

The projector includes a projection lamp and mirror arrangement by which light is projected through the projection aperture in the direction indicated by arrow 28. The light passes successively through the film, through the lens element assembly 20 and then through a projection lens assembly 30 by which the image on the film is focussed onto a screen. Assembly 30 includes a lens mount 32 which is shown partly exploded from the remainder of the projector in Fig. 1 and which is in fact received in guideways 34 in a lens mount saddle 36 so that the projection lens assembly can be adjusted back and forth for focusing purposes. Details of the adjustment mechanism have not been shown since they form no part of the present invention.

Lens mount saddle 36 is secured to the frame of the projector, part of which is indicated at 38, and is itself shaped to provide a housing for the field flattener lens element assembly 20 and to support that assembly adjacent to stator 24. Also shown mounted on frame 38 is a cam unit 40, the purpose of which is to decelerate the moving film in the region of the projection aperture 26 so that the film is arrested and held stationary in the vicinity of the projection aperture 26 for projection of each frame. Cam unit 40 is essentially the same as the corresponding unit described and illustrated in the Shaw patent and will not therefore be described in detail.

Referring now to Fig. 2, the film support element assembly is shown as it would be seen from the side which is closest to the stator in the assembled projector; that is, the opposite side as compared with Fig. 1. A length of film is indicated partly in ghost outline at 42 in Fig. 2 and is shown generally in the path the film would normally adopt during transportation past assembly 20, although it should be noted that loops such as would normally be formed in the films during transportation have not been shown.

Assembly 20 includes an elongate field flattener lens element 44 supported in a housing or body 46. Element 44 has a cylindrically curved surface 48 which extends about an imaginary axis represented at X—X in Fig. 2. In fact, axis X—X corresponds to the rotational axis of the rotor 22 and the axis of the stator 24 so that the curvature of surface 48 corresponds to the curvature of the film passage defined between the rotor and the stator. Film 42 is transported in a path extending generally transversely with respect to axis X—X and successive portions of the film are laid across surface 48 during such transportation as described in the Shaw patent.

Element 44 is supported for movement in the direction of axis X—X between first and second positions in which respectively different portions of its curved surface 48 are disposed in the film path. This support is provided by the lens element housing 46 and by a so-called aperture block 50 in which the housing is slidably mounted. Housing 46 is shown in a lower position in full lines in which an upper portion of the curved surface 48 is in the film path, and in ghost outline in an upper position, in which a lower portion of surface 48 would be behind the film.

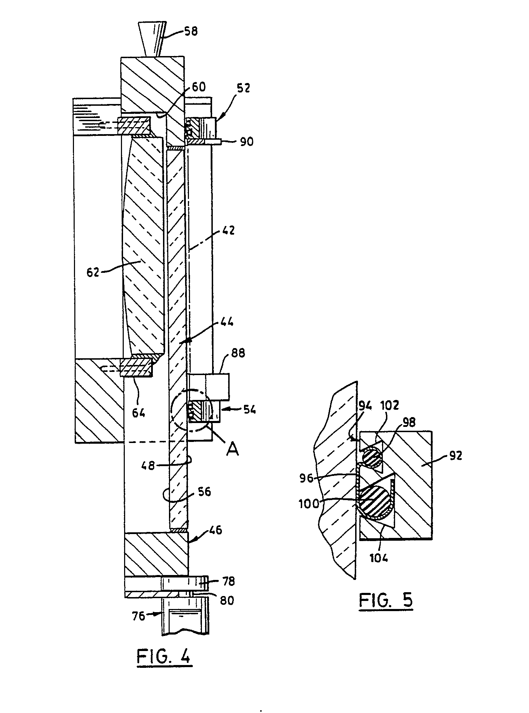

Wiper elements generally indicated at 52 and 54 are provided respectively above and below the film path and are supported by the aperture block 50. The elements are shown in more detail in Figs. 4 and 5 (to be described) and are disposed in contact with the lens element surface 48 so as to wipe the surface and trap debris which are accumulated thereon, upon movement of the lens element relative to the wiper elements. The lens elements are removable for the disposal of trapped debris as will be more particularly described later.

The cylindrically curved surface 48 of the lens element is continuous and is of uniform cross-sectional shape throughout its length so that up and down movement of the element has no effect whatever on the image being projected by the projector. In this particular embodiment, the axial length of surface 48 is approximately two and a half times the width W of film 42. This ensures that the entire axial extent of the portion of surface 48 which is moving out of the film path (the "dirty" portion) is wiped by the relevant wiper element. Thus, the axial length of element 44 should be sufficient to ensure that this occurs otherwise debris remaining on that portion of the lens element would be transferred back into the path of the film the next time the lens element were moved in the opposite direction.

In this embodiment, the field flattener lens element is formed in one piece and is made of fused silica optical grade No. 1 quartz. In an alternative embodiment, the element could be made in sections cemented together so as to form the continuous cylindrical surface 48.

Fig. 4 shows the lens element assembly in vertical section and it will be seen that element 44 is relatively thin and has a flat inner surface 56. The element is cemented in a suitably shaped opening in its housing 46 and the front surface of the housing is shaped to correspond with the curvature of element surface 48 (see Fig. 2). Two knobs 58 protrude from the top of housing 46 for facilitating handling of the lens element, e.g. during its assembly into block 50.

Referring back to Fig. 4, it will be seen that housing 46 defines a recess 60 behind the lens element. This recess receives a spherical lens element 62 which co-operates with element 44 during projection of the film to provide the optical characteristics required in the projector. Element 62 is stationary and does not move with lens element 44. Recess 60 therefore extends over the full length of element 44 so that the spherical element can be accommodated in any axial position of element 44. Element 62 is rectangular in shape and is cemented into a suitable lens mounted 64 which is bolted to a part of aperture block 50 behind the cylindrical lens housing 46 as seen in Fig. 2.

Referring back to Fig. 2, it will be seen that housing 46 is shaped to define longitudinal ribs 66 and 68, one on each side which form guides received in complimentary guideways, one of which is indicated at 70, for permitting vertical sliding movement of housing 46 with respect to aperture block 50.

In the illustrated embodiment, an air cylinder 72 is provided for effecting vertical sliding movement of housing 46 although it will of course be understood that this is optional. In an alternative embodiment, manual operation could be employed. In any event, air cylinder 72 is supported by suitable brackets generally indicated at 74 secured to the frame of the projector below the lens mount saddle 36 (see Fig. 1). The air cylinder has a piston rod 76 which protrudes from the top bracket 74 (see Fig. 2) and which is provided at its outer end with a fitment including a head 78 having a depending neck 80. The fitment is received in a suitably dimensioned T-shaped slot 82 adjacent the lower end of housing 46.

Slot 82 is open at both sides so that the holder can be detached from the piston at appropriate times. The stroke of cylinder 72 is selected to provide for movement of lens element 44 substantially between its extreme end positions. A suitable pneumatic supply and control will of course be provided for air cylinder 72. Typically, a manual control arrangement will be provided so that the projector operator can simply move the lens element when he notices that the projected image is being affected by debris.

Aperture block 50 is an assembly of individual components and substantially completely encloses the lens element 44 and its housing 46 except for a front portion between the wiper elements 52 and 54 where the curved surface of element 44 is exposed. On opposite sides of this surface are portions 84 and 86 of the aperture block which are recessed as indicated at 84a and 86a respectively to leave lands $84^b$ and $86^b$ against which marginal areas of the film frames are supported during film transportation. Lands $84^b$ and $86^b$ are hard chromed. Below portions 84, 86 is a ledge or shoulder 88 which forms a guiding surface from the bottom edge of the film. A corresponding plate 90 extends parallel to shoulder 88 and forms a guiding surface for the upper edge of the film. The wiper elements 52 and 54 are disposed adjacent to and outwardly of these respective surfaces. The wiper elements are shown in section in Fig. 4 and are essentially the same as one another. Fig. 5 is an enlarged sectional view of element 54 and it will be seen that the element includes an elongate housing 92 having an inner surface 94 which is curved in conformity with the curvature of the curved surface of lens element 44. Extending across part of surface 94 is a section 96 of absorbant material selected to remove and retain particles of film emulsion and other debris. Specifically, the material may be 3M film cleaning tissue. The material is held in place by two resilient strips 98 and 100 pressed into respective recesses 102 and 104 which open into surface 94 and by which the material is trapped. The recesses extend over the entire length of housing 92 and are undercut so that the strips 100 and 102 have to be distorted in moving into and out of the respective recesses. The recesses are spaced in the direction of movement of the lens element 44 so as to resist accidental dislodgement of the cleaning material during movement of the lens element. At the same time, the cleaning material can be readily removed by prying the strips from the recesses using a suitable tool. The material will then be discarded and replaced by fresh material. In assembling the wiper element, the strips 98, 100 are in fact installed so that strip 100 holds the cleaning material slightly clear of surface 94 so that the material is resiliently supported.

The wiper elements themselves are of course removable from aperture block 50 for this purpose. Referring back to Fig. 2, it will be seen that the elements are received in respective recesses in block 50 and normally retained by releaseable spring clips. Thus, referring to the upper wiper element by way of example, it will be seen that the element is shaped to define respective recesses 106 and 108 adjacent its ends. One of these recesses receives a fixed projection 110 on aperture block 50 while the other recess receives a detent formed adjacent the outer end of a leaf-spring 112 secured to the aperture block. A corresponding spring for the lower wiper element is denoted 114. The springs can each be deflected outwardly by respective release levers 116 and 118, each of which is pivoted in a slot in block 50 so that, by depressing the lever (as indicated by arrow 120 in the case of lever 116), the opposite end of the lever will pivot outwardly and release the associated leaf-spring. The wiper element can then of course be removed, its cleaning tissue replaced and the wiper element simply snap-fitted back into aperture block 50.

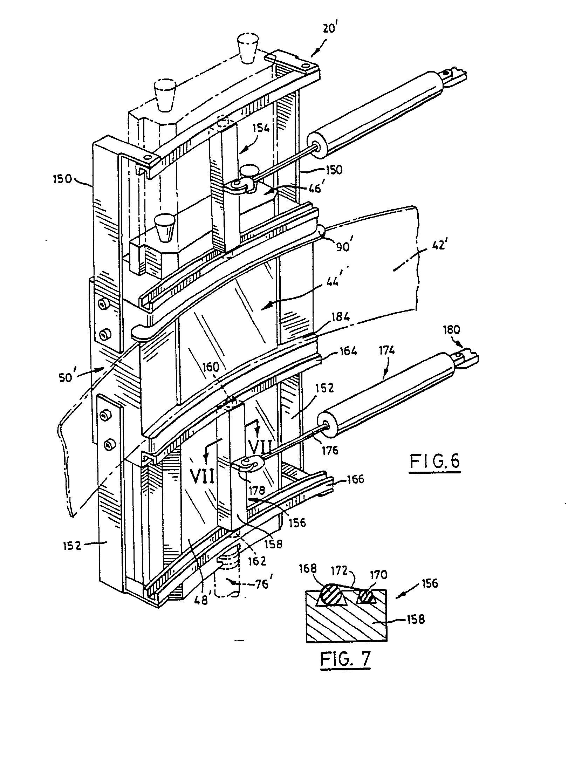

Reference will now be made to Figs. 6 to 12 in describing other forms of cleaning means which may be employed in a film support element assembly provided by the invention. In the embodiment of Figs. 6 to 10 inclusive, cleaning means in the form of wiper elements are employed. In all of these views, primed reference numerals have been used to denote parts which correspond with parts shown in Figs. 1 to 5.

In Figs. 6 and 7, wiper elements are shown which are movable transversely with respect to the direction of movement of the film support element (i.e. parallel to the direction of film movement). The element and its housing are essentially of the same form as those shown in Figs 1 to 5 and are denoted respectively by reference numerals 44' and 46'. Housing 46' is moveable between first and second positions in an aperture block denoted 50' under the control of an air cylinder, the piston rod of which is shown at 76'.

Aperture block 50' is somewhat different from the aperture block shown in the previous embodiment in that it includes upper and lower brackets generally indicated at 150 and 152 respectively which support tracks for guiding respective wiper elements 154 and 156 for movement transversely of the lens 44'. The two wiper elements and associated structure are essentially the same and for convenience of description, only the lower wiper element and associated structure will be described in detail.

The element itself takes the form of a bar 158 which is disposed generally longitudinally of the surface of lens element 44' and which has cylindrical projections 160 and 162 from its upper and lower ends which are received in respective tracks 164 and 166. The tracks are carried by the brackets 152. Fig. 7 is a sectional view through bar 158 and it will be seen that the structure of the wiper element is essentially very similar to the structure of the wiper element of the previous embodiment as best shown in Fig. 5. Thus, bar 158 forms a housing for two resilient sealing strips 168 and 170 which are disposed in recesses opening into the inner face of the housing. The sealing strips retain a section 172 of lens cleaning tissue. The wiper element is disposed so that sealing strip 168 is partially compressed in use so that the cleaning material is resiliently urged against the surface of the lens element. The tracks 164 and 166 are curved to conform with the curvature of the lens element surface so that the cleaning material 172 is maintained in contact with the surface throughout its movement.

A double acting air cylinder 174 is employed to actuate the wiper element 156. A piston 176 projects from one end of the air cylinder and is fitted with a yoke which is pivotally coupled to a bracket 178 on bar 158. At its opposite end, the cylinder is pivotally mounted to a bracket 180 fixed to a stationary part of the projector. The stroke of air cylinder 176 is selected to ensure wiping of the whole width of lens element 44' and to permit retraction of the wiper element to a rest position clear of the lens element.

Air cylinder 174 and the companion cylinder coupled to wiper element 154 are operated selectively when the lens element has been moved to bring a portion of its surface on which debris has accumulated out of the film path. Normally, the relevant wiper element will be moved from its rest position and back at least once. Selective operation of the respective air cylinders may be accomplished under manual control or automatically in timed relation with operation of the air cylinder 72 by which the lens element is displaced.

In Fig. 6, a section of the film is indicated at 42' in ghost outline and it will be seen that the film is guided between an upper plate 90' and a lower shoulder 184 on aperture block 50' generally in the same manner as described in connection with the preceding embodiment except in that the plate 90 of Fig. 2 has in effect been replaced by shoulder 182 in Fig. 6.

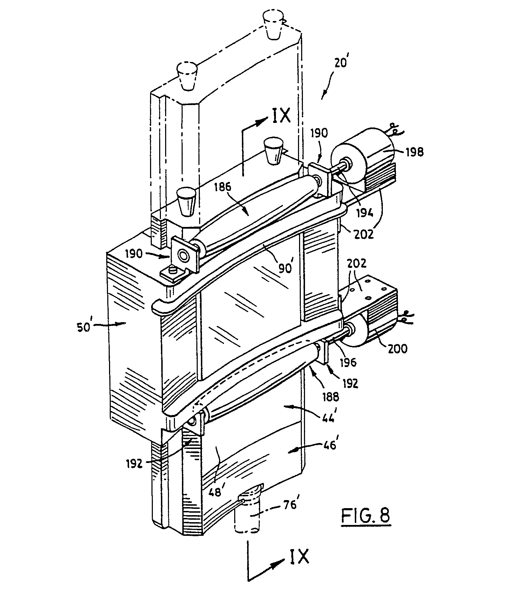

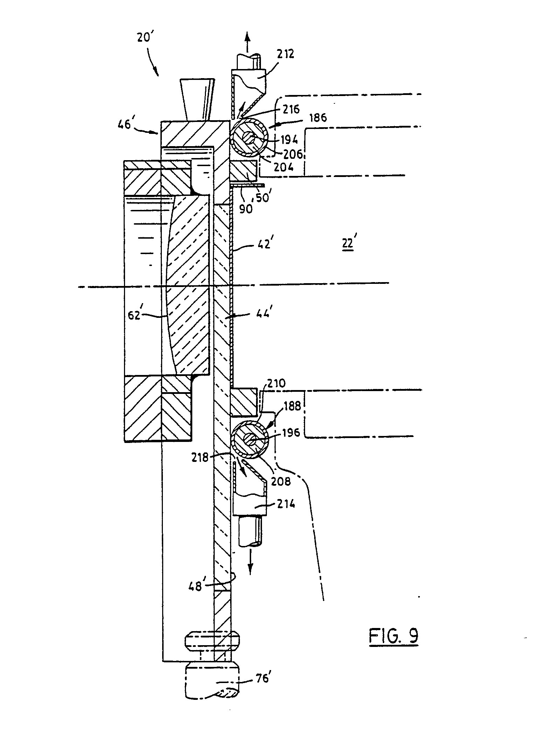

Referring now to Figs. 8 and 9, in this embodiment, the wiper elements take the form of rollers 186 and 188 disposed respectively above and below the film path and arranged to wipe the curved surface of the lens element as it moves between its first and second positions. The rollers are mounted to turn in respective brackets generally denoted 190 and 192 and mounted on the aperture block 50'. The block itself is essentially the same as the block as shown in Fig. 6 with the exception that the brackets 150 and 152 have been omitted. The lens element 44' and its housing 46' are also essentially the same as in the preceding embodiments.

It will be noted that each of the rollers 186 and 188 is of a length slightly greater than the width of lens element 44' and is barrel-shaped with a profile corresponding generally to the curvature of the curved surface of the lens element. The rollers include respective shafts 194 and 196 which are rotatably mounted in the brackets 190 and 192 and which extend generally normal to the direction in which the lens element is displaced in moving between its first and second positions. Each shaft is coupled to a respective electric motor 198 and 200 carried by brackets 202 secured to the aperture block 50'.

The rollers are shown in section in Fig. 9 and it will be seen that each roller is of composite construction and includes a body which is mounted on the roller shaft and which is itself surrounded by a cover. In the case of roller 186, the body is denoted 204 and the cover 206 while in the case of the other roller the body is indicated at 208 and the cover 210. The bodies 204 and 208 are resilient and are typically made of rubber bonded to the respective shafts. The covers 206 and 210 are sections of lens cleaning paper adhesively secured to the respective roller bodies. Preferably, the paper is replaceable. In an alternative embodiment, the covers 206 and 210 may be made of a material which is "tacky" and to which particles of debris on the lens element will adhere. In this case, it may be sufficient to allow the rollers to rotate freely in contact with the lens element rather than providing external drive means (the motors 198 and 200) as in the illustrated embodiment. In that case, the rollers would be rotated upon longitudinal movement of the lens element by virtue of the friction between the rollers and the element. In the illustrated embodiment, however, this is accomplished by the motors 198 and 200. Where motors are provided, they preferably incorporate suitable gearing arranged to cause the rollers to rotate at relatively slow speeds. Normally, the rollers will rotate only when the lens element is displaced and preferably the rollers will be separately actuated so that only that roller which is actually performing a cleaning function will rotate at any given time. Control of the motors may of course be effected manually or by suitable automatic control means.

Fig. 9 also illustrates a further optional feature of the invention in which suction means are provided in association with each of the rollers to remove and convey to a remote location (not shown) debris dislodged from the surface of the lens element. Suction means may also be used in association with the wiper elements disclosed in other embodiments but may be particularly useful where roller form wiper elements are used. Thus, referring to Fig. 9, respective suction manifolds 212 and 214 are provided adjacent to but outwardly of the rollers 194 and 196. The manifolds extend generally parallel to and over substantially the entire length of each roller and each manifold has an intake slot 216 and 218 respectively disposed adjacent the line of contact between the associated roller and the lens element surface. The rollers are arranged to rotate in opposite directions so that any debris dislodged from the lens element but not captured by the roller will be thrown away from the film path and into the intake slot of the associated manifold. The manifolds will be mounted on suitable stationary supports (not shown) mounted on fixed parts of the projector and will be coupled to a suitable source of suction which is preferably incorporated in the pneumatic system normally provided on the projector.

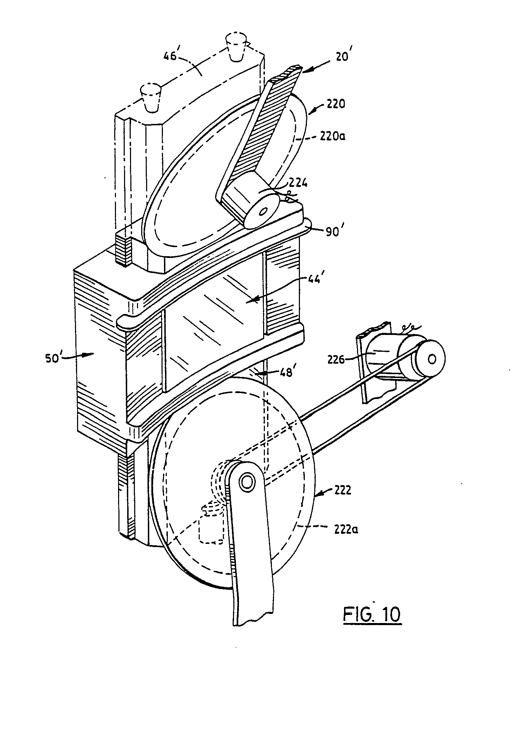

Fig. 10 illustrates an embodiment of the invention in which disc-form wiper elements are employed. In the illustrated embodiment, two discs denoted respectively 220 and 222 are provided above and below the film path and are disposed in respective planes which are inclined outwardly away from the aperture block 50' at relatively shallow angles to the curved surface of the lens element so that marginal portions of the respective discs are applied to the lens element and describe arcuate cleaning paths across the surface of the lens element outwardly of but adjacent to the aperture block 50'. The angle at which the discs are inclined to the lens element will depend on the curvature of the lens element surface and on the diameter of the disc but in a typical example an angle of the order of 15° may be appropriate for a five inch disc. The marginal portions of the disc are flexible with respect to the remainder of the disc and lie substantially on the curved surface of the lens element. The discs are made of a suitable plastic material and the marginal portions which contact the lens element are covered with a lens cleaning material. In this particular embodiment, lens cleaning paper is employed and is secured to the remainder of the disc by double-sided tape. This material is indicated in dotted outline at 220a in the case of disc 220 and at 222a in the case of disc 222.

The discs are rotatable about their respective centers of rotation by respective electric drive motors denoted 224 and 226 in Fig. 10. Motor 224 drives disc 220 directly and is supported by a bracket 228 coupled to a stationary part of a projector. Due to space limitations in the projector, motor 226 is located in a laterally spaced position away from disc 222 and drives the disc through a belt and pulley arrangement. In both cases, the motors are provided with gearing arranged to turn the discs at relatively low speeds and as in the preceding embodiment, the motors are preferably separately controlled either manually or by suitable automatic control means.

It will of course be appreciated that the embodiment described above are given by way of example only and that many modifications are possible in addition to those specifically mentioned. For example, the field flattener lens element could be arranged to be manually displaceable as discussed above. Where a spherical lens element is required in association with the field flattener lens element, the particular arrangement described can be varied. The spherical lens element could be completely separate from the field flattener lens element assembly. In the embodiment of Figs. 1 to 3, the leaf springs 112, 114 could of course be replaced by springloaded latches.

Another possible modification would be to provide means for vibrating the lens element in combination with other forms of cleaning means (e.g. wipers).

It will also be appreciated that while the invention has been described primarily in connection with a projector of the general type disclosed in the US—A—3600073, there is no limitation in this respect. Where a field flattener lens element is required in some other form of rolling loop tye of projector or in a camera or other similar apparatus, the assembly provided by the invention may also be used. Such an assembly will normally be used in a motion picture film apparatus although within the broad scope of the invention, the assembly could be used with a still camera or projector. Further it should be noted that the assembly provided by the invention may find application in an environment in which the film lies flat during exposure or projection (as the case may be). For example, as disclosed in US—A—3794415. In that case, the lens element of the assembly would have a generally flat outer face for supporting the film and would not in fact act as a field flattener.

It is also to be noted that cleaning means other than the specific examples described above may be employed. Jets of cleaning fluid (e.g. air or a suitable liquid) may be employed as a cleaning means either alone or in combination with other cleaning means. In some cases, cleaning means need be provided at one side of the film path only.

## Claims

1. A film support element assembly (20) for a projector, camera or like apparatus having a rolling loop film transport mechanism, the assembly being adapted to support a film in relation to an aperture of said apparatus and comprising a lens element (44; 44') having a film support surface (48; 48') across which successive portions of a film (42; 42') of known width (W) can be laid during transport of said film in a film transport path including said aperture; characterised by means (46, 50; 46', 50') supporting said lens element (44; 44') for movement in a direction generally normal to said path between first and second positions in which respectively different portions of said film support (48; 48') are disposed in said film path; said film support surface (48; 48') of the lens element being continuous and of uniform cross-sectional shape and having a length sufficiently in excess of twice the width (W) of the film (42; 42') so that said movement of the lens element (44; 44') between its first and second positions will cause a portion of said film support surface (48; 48') in said path to move to a position adjacent to and clear of said path; and, cleaning means (52, 54; 154, 156; 186, 188; 220, 222) adapted to remove debris from a said portion of said film support surface (48; 48') which has been moved out of said path.

2. An assembly as claimed in claim 1, characterised in that said cleaning means comprises first and second wiper elements (52, 54) extending transversely of and in contact with said film support surface (48) on respectively opposite sides of said film path, said elements (52, 54) being adapted to wipe said surface and trap debris which has accumulated thereon, upon movement of the lens element (44) relative to said wiper elements (52, 54), and said wiper elements being removable for disposal of trapped debris.

3. An assembly as claimed in claim 1, characterised in that said cleaning means comprises a wiper element (154 or 156) moveable transversely with respect to the direction of movement of said lens element (44') between its first and second positions and adapted to wipe across a said portion of the film support surface (48') which has been moved out of said film transport path and to remove debris from said surface portion.

4. An assembly as claimed in claim 1, characterised in that said cleaning means comprises a roller (186 or 188) having a surface disposed in contact with said film support surface (48') externally of but adjacent to said film transport path, said roller (186 or 188) being rotatable about an axis geneally normal to the direction of movement of the lens element (44) between its said first and second positions, and said roller surface being adapted to remove debris from said film support surface (48') upon movement of said lens element (44') to bring said portion of the film support surface to said position adjacent to and clear of said path.

5. Apparatus as claimed in claim 1, characterised in that said cleaning means comprises a cleaning disc (220 or 222) disposed in a plane inclined at a relatively shallow angle with respect to a said portion of the film support surface (48') which has been moved out of said film transport path, a marginal portion (220a or 222a) of said disc being disposed in contact with said film support surface (48') and being adapted to remove debris therefrom; and drive means (224 or 226) coupled to said disc (220 or 222) and adapted to rotate the disc and bring successive marginal areas of the disc into contact with said film support surface for removing debris therefrom.

6. An assembly as claimed in any one of the preceding claims, characterised in that said lens element (44) is a field flattener lens, and in that said film support surface (48) is cylindrically curved about an axis corresponding to the axis of curvature (X—X) of the film at the position of said aperture.

7. An assembly as claimed in claim 6, characterised in that said means supporting the lens element comprises a housing (46) in which said lens element (44) is carried with said cylindrically curved surface (48) exposed, and a mounting block (50) adapted to be secured in said apparatus in a fixed position with respect to said film (42), said housing (46) being slidably received in said mounting block (50) for movement between said first and second positions, and said mounting block (50) defining an opening across which said film (42) is transported in use and through which said cylindrically curved surface (48) of the field flattener lens is exposed to said film, and surfaces (84, 86) on respectively opposite sides of said opening are curved to form continuations of said cylindrically curved surface (48).

8. An assembly as claimed in claim 7, characterised by a fluid pressure operated actuating cylinder unit (72) including a piston rod (76) adapted to be coupled to said lens element housing (46) so as to extend substantially parallel to said axis (X—X), and a cylinder adapted to be secured to said apparatus so that operation of said piston will cause movement of said lens element (44) between said first and second positions.

9. An assembly as claimed in claim 7 or 8, characterised in that said lens element housing (46) is formed with a recess (60; 60') at a rear side thereof, and wherein said assembly further comprises a spherical lens element (62; 62') disposed in said recess behind said film path and coupled to said mounting block (50; 50'), said recess (60; 60') being shaped to permit movement of said housing (46; 46') corresponding to movement of said lens element (44) between said first and second positions while permitting said spherical lens element (62; 62') to remain stationary.

10. A projector or camera comprising a rolling loop film transport mechanism including a stator (24) and a rotor (22) adapted to co-operate to form continuous rolling loops in said film (42) and to cause transport thereof through the apparatus along a film path which includes an aperture, and a film support element assembly to support the film in relation to the aperture as claimed in any one of the preceding claims.

**Patentansprüche**

1. Filmführungs-Baueinheit (20) für einen Projektor, eine Kamera oder ein ähnliches filmtechnisches Gerät mit Roll-schleifen-Filmtransport (rolling loop film transport mechanism), welche Baueinheit zur Führung eines Filmes bezüglich eines Bildfensters des Gerätes ausgebildet ist und eine Objektivlinse (44; 44') mit einer Filmführungsfläche (48; 48') aufweist, an die aufeinanderfolgend Abschnitte des Filmes (42; 42') bekannter Breite (W) während des Filmtransportes auf einem das Bildfenster einschließenden Filmweg angelegt werden, gekennzeichnet durch eine Einrichtung (46, 50; 46', 50') zur Halterung der Objectivlinse (44'; 44'), die in einer im wesentlichen zum Filmweg senkrechten Richtung zwischen zwei Stellungen bewegbar ist, in denen jeweils verschiedene Teile der Filmführungsfläche (48; 48') auf dem Filmweg angeordnet sind, wobei die Filmführungsfläche (48; 48') der Objektivlinse kontinuierlich und mit gleichmäßiger Querschnittsform ausgebildet ist sowie eine die doppelte Breite (W) des Filmes (42; 42') übersteigende Länge aufweist, so daß die Bewegung der Objektivlinse (44; 44') zwischen ihren beiden Stellungen den auf dem Filmweg befindlichen Teil der Filmführungsfläche (48; 48') in eine Lage neben und außerhalb des Filmweges bewegt, und durch eine Reiningungseinrichtung (52, 54; 154, 156; 186, 188; 220, 222) zur Entfernung von Abrieb von dem aus dem Filmweg herausbewegten Teil der Filmführungsfläche (48, 48').

2. Baueinheit nach Anspruch 1, dadurch gekennzeichnet, daß die Reinigungseinrichtung zwei Wischerelemente (52, 54) aufweist, die an den einander gegenüberliegenden Seiten des Filmweges angeordnet sind und unter Anlage an der Filmführungsfläche (48) quer über dieselbe verlaufen, zum Abwischen dieser Fläche sowie zum Sammeln des darauf angesammelten Abriebes bei der Bewegung der Objektivlinse (44) bezüglich der Wischerelemente (52, 54) ausgebildet und zur Entfernung des gesammelten Abriebes lösbar angebracht sind.

3. Baueinheit nach Anspruch 1, dadurch gekennzeichnet, daß die Reinigungseinrichtung ein Wischerelement (152 oder 154) aufweist, das quer zur Bewegungsrichtung der Objektivlinse (44') zwischen ihren beiden Stellungen bewegbar und zum Abwischen des aus dem Filmweg herausbewegten Teiles der Filmführungsfläche (48') sowie zur Entfernung von Abrieb von diesem Flächenteil ausgebildet ist.

4. Baueinheit nach Anspruch 1, dadurch gekennzeichnet, daß die Reinigungseinrichtung eine Walze (186 oder 188) aufweist, deren Oberfläche mit der Filmführungsfläche (48') außerhalb, jedoch nahe dem Filmweg in Berührung steht und die um eine im wesentlichen zur Bewegungsrichtung der Objektivlinse (44') zwischen ihren beiden Stellungen senkrechte Achse drehbar ist, wobei die Walzenoberfläche zur Entfernung von Abrieb von der Filmführungsfläche (48') bei derjenigen Bewegung der Objektivelinse (44') ausgebildet ist, bei der der genannte Teil der Filmführungsfläche in die neben und außerhalb des Filmweges befindliche Lage gebracht wird.

5. Baueinheit nach Anspruch 1, dadurch gekennzeichnet, daß die Reinigungseinrichtung eine Reinigungsscheibe (220 oder 222) aufweist, die in einer zu dem aus dem Filmweg herausbewegten Teil der Filmführungsfläche (48') unter verhältnismäßig geringem Winkel geneigten Ebene angeordnet ist, wobei der Randbereich (220a oder 222a) der Scheibe mit der Filmführungsfläche (48') in Berührung steht und zur Entfernung von Abrieb ausgebildet ist, und daß mit der Scheibe (220 oder 222) eine Antriebseinrichtung (224 oder 226) gekuppelt ist, die die Scheibe in Drehung versetzt und aufeinanderfolgende Randabschnitte der Scheibe mit der Filmführungsfläche zur Entfernung von Abrieb von derselben in Berührung bringt.

6. Baueinheit nach den Ansprüche 1 bis 5, dadurch gekennzeichnet, daß die Objektivlinse (44) eine Bildandrucklinse (flattener lens) ist und daß die Filmführungsfläche (48) um eine Achse zylindrisch gekrümmt ist, die der Krümmungsachse (X—X) des Filmes an der Stelle des Bildfensters entspricht.

7. Baueinheit nach Anspruch 6, dadurch gekennzeichnet, daß die Einrichtung zur Halterung der Objektivlinse ein Gehäuse (46), in dem die Objektivlinse (44) mit freiliegender zylindrisch gekrümmter Fläche (48) gelagert ist, und einen Montageblock (50) aufweist, der in dem Gerät an einer bezüglich des Filmes (42) festen Stelle befestigt ist, daß das Gehäuse (46) in dem Montageblock (50) zwischen zwei Stellungen verschiebbar gelagert ist, und daß der Montageblock (50) eine Öffnung begrenzt, über die der Film (42) im Betrieb transportiert wird und durch welche die zylindrisch gekrümmte Fläche (48) der Bildandrucklinse zum Film hin freiliegt, wobei an den einander gegenüberliegenden Seiten der Öffnung gekrümmte Flächen (84, 86) zur Bildung von Fortsetzungen der zylindrisch gekrümmten Fläche (48) vorgesehen sind.

8. Baueinheit nach Anspruch 7, gekennzeichnet durch eine druckmittelbetätigte Zylindereinheit (72) mit einer an das Objektivlinsen-Gehäuse (46) anschließbaren Kolbenstange (76), die in wesentlichen parallel zur Krümmungsachse (X—X) verläuft, und mit einem an das Gerät anschließbaren Zylinder, so daß bei Betätigung des Kolbens die Objektivlinse (44) zwischen den beiden Stellungen bewegt wird.

9. Baueinheit nach Anspruch 7 oder 8, dadurch gekennzeichnet, daß das Objektivlinsen-Gehäuse (46) an seiner Rückseite mit einer Ausnehmung (60; 60') ausgebildet ist, und daß die Baueinheit weiters eine sphärische Objektivlinse (62; 62') aufweist, die hinter dem Filmweg in der Ausnehmung angeordnet und mit dem Montageblock (50) verbunden ist, wobei die Ausnehmung (60; 60') für .eine der Bewegung dder Objektivlinse (44; 44') zwischen den beiden Stellungen entsprechende Bewegung des Gehäuses (46; 46') bei zugleich ortsfest gehaltener sphärischer Objektivlinse (62; 62') gestaltet ist.

10. Projektor oder Kamera mit Rollschleifen-Filmtransport (rolling loop film transport mechanism), der einen Stator (24) und einen mit diesem zur Bildung Kontinuierlicher Rollschleifen (rolling loops) des Filmes (42) zusammenwirkenden Rotor (22) aufweist, der zum Filmtransport durch das Gerät entlang des Filmweges einschließlich eines Bildfensters ausgebildet ist, und mit einer Filmführungs-Baueinheit zur Führung des Filmes bezüglich des Bildfensters, nach den Ansprüchen 1 bis 9.

**Revendications**

1. Dispositif support (20) de film pour projecteur, caméra ou appareil analogue muni d'un méchanisme d'entraînment du film à boucle tournante ce dispositif étant adapté à supporter un film par rapport à une ouverture de l'appareil et comprenant un élément à lentille (44., 44') ayant une surface (48., 48') de support du film contre laquelle des parties succesives d'un film (42., 42') de largeur connue (W) peuvent reposer pendant le déplacement de ce film le long d'un trajet d'entraînement du film comprenant ladite ouverture; caractérisé par des moyens (46, 50., 46', 50) de support de l'élément à lentille (44., 44') permettant un mouvement dans une direction généralement perpendiculaire audit trajet entre une première et une seconde positions dans lesquelles la surface (48., 48') de support du film a des parties respectivement différentes disposées sur le trajet du film, cette surface (48., 48') de support du film de l'élément à lentille étant continue et de section transversale à forme constante, et ayant une longueur dépassant suffisamment deux fois la largeur (W) du film (42., 42') pour que le mouvement de l'élément à lentille (44., 44') entre ses première et seconde positions amène une partie de la surface (48., 48') de support du film qui se trouve dans ledit trajet à une position adjacente audit trajet et totalement en dehors dudit trajet, et des moyens de nettoyage (52, 54., 154, 156., 186, 188., 220, 222) adaptés à enlever des poussières d'une telle partie de la surface (48., 48') de support du film qui a été amenée hors du trajet.

2. Dispositif conforme à la revendication 1, caractérisé en ce que les moyens de nettoyage comprennent un premiere et un second éléments d'essuyage (52, 54) s'étendant transversalement à la surface (48) de support du film et en contact avec celle-ci, située sur des côtes respectivement opposés du trajet du film, ces éléments (52, 54) étant adaptés à essuyer ladite surface et ramasser les poussières qui s'y sont accumulées, par le mouvement de l'élément à lentille (44) par rapport à ces éléments d'essuyage (52, 54), tandis que ces elements d'essuyage sont amovibles pour l'évacuation des poussières ramassées.

3. Dispositif conforme à la revendication 1, caractérisé en ce que les moyens de nettoyage comprennent un élément d'essuyage (154 ou 156) mobile transversalement à la direction du mouvement de l'élément à lentille (44') entre ses première et seconde positions et adapté à essuyer une partie du genre précité de la surface (48') de support du film qui a été déplacée hors du trajet d'entraînement du film et à enlever les poussières de cette partie de·la surface.

4. Dispositif conforme à la revendication 1, caractérisé en ce que les moyens de nettoyage comprennent un rouleau (186 ou 188) ayant une surface en contact avec la surface (48') de support du film à l'extérieur du trajet d'entraînement du film mais à côté de celui-ci, ce rouleau (186 ou 188) pouvant tourner autour d'un axe généralement normal à la direction du mouvement de l'élément à lentille (44) entre ses première et seconde positions, et ladite surface du rouleau étant adaptée à enlever les poussières de la surface (48'), du film lors du mouvement de l'élément à lentille (44') amenant ladite partie de la surface de support du film à ladite position adjacente au trajet et distincte de ce trajet.

5. Dispositif conforme à la revendication 1, caractérisé en ce que les moyens de nettoyage comprennent un disque de nettoyage (220 ou 222) situé dans un plan incliné d'un angle relativement faible par rapport à une partie du genre précité de la surface (48') de support du film qui a été déplacée hors du trajet d'entraînement du film, une partie périphérique de ce disque (220a ou 222a) étant disposée en contact avec ladite surface (48') de support du film et étant adaptée à enlever les poussieres de celle-ci., et des moyens d'entraînement (224 ou 226) reliés à ce disque et adaptés à entraîner le disque en rotation et à amener des zones périphériques successives du disque en contact avec la surface de support du film pour en enlever les poussières.

6. Dispositif conforme à l'une quelconque des revendications précéndentes, caractérisé en ce que l'élément à lentille (44) est une lentille "nivelleuse de champ", et en ce que la surface (48) de support du film est incurvée cylindriquement autour d'un axe correspondant à l'axe de courbure (X—X) du film à l'emplacement de ladite ouverture.

7. Dispositif conforme à la revendication 6, caractérisé en ce que les moyens de support de l'élément à lentille comprennent un boîtier (46) qui porte cet élément à lentille (44) en laissant exposée la surface incurvée cylindriquement (48), et un block de montage (50) adapté à être fixé dans ledit appareil dans une position fixé par rapport au film (42), le boîtier (46) étant monté à coulisse dans le bloc de montage (50) pour permettre le mouvement entre lesdites première et seconde positions, et ce de montage (50) définissant une ouverture à travers laquelle le film (42) est entraîné en service, et à travers laquelle la surface incurvée cylindriquement (48) de la lentille "nivelleuse de champ" est exposée au film, et des surfaces (84, 86) situees sur des côtes respectivement opposés de ladite ouverture sont incurvées pour former des prolongements de la surface incurvée cylindriquement (48).

8. Dispositif conforme à la revendication 7, caractérisé par un ensemble à cylindre d'actionnement (72) mu par un fluide sous pression comprenant une tige de piston (76) adaptée à être reliée au boîtier (46) de l'élément à lentille de facon à s'étendre sensiblement parallèlement à l'axe (X—X), et un cylindre adapté à être fixé à l'appareil de sorte que le fonctionnement du piston provoque un mouvement de l'élément à lentille (44) entre ses première et seconde positions.

9. Dispositif conforme à la revendication 7 ou 8, caractérisé en ce que le boîtier (46) de l'élément à lentille présente un évidement (60., 60') à l'arrière, et en ce que ce dispositif comprend de plus un élément à lentille sphérique (62., 62') placé dans cet évidement derrière le trajet du film et relié au bloc de montage (50., 50'), l'évidement (60., 60') étant conformé pour permettre un mouvement du boîtier (46., 46') correspondant à un mouvement de l'élément à lentille (44) entre ses première et seconde positions, tout en permettant à l'élément à lentille sphérique (62., 62') de rester immobile.

10. projecteur ou caméra comprenant un mécanisme d'entraînement du film à boucle tournante qui comporte un stator (24) et un rotor (22) adaptés à coopérer pour former des boucles tournantes continues dans le film (42) et à provoquer son entraînement dans l'appareil le long d'un trajet de film muni d'une ouverture, et un dispositif support de film pour supporter le film relativement à l'ouverture conformément à l'une quelconque des revendications précédentes.

0 072 198

FIG. 1

FIG. 3

FIG. 2

FIG. 4

FIG. 5

FIG.6

FIG. 7

FIG. 8

FIG. 9

FIG. 10